Europäisches Patentamt

European Patent Office

Office européen des brevets

(11) Numéro de publication : **0 345 101 B1**

# FASCICULE DE BREVET EUROPEEN

(45) Date de publication du fascicule du brevet :
**26.02.92 Bulletin 92/09**

(51) Int. Cl.$^5$ : **B62D 1/18**

(21) Numéro de dépôt : **89401055.2**

(22) Date de dépôt : **17.04.89**

(54) **Dispositif de réglage d'une colonne de direction d'un véhicule automobile pourvu de moyens de blocage à genouillère.**

(30) Priorité : **30.05.88 FR 8807172**

(43) Date de publication de la demande :
**06.12.89 Bulletin 89/49**

(45) Mention de la délivrance du brevet :
**26.02.92 Bulletin 92/09**

(84) Etats contractants désignés :
**DE GB IT NL**

(56) Documents cités :
**EP-A- 0 222 628**
**FR-A- 1 581 191**
**GB-A- 2 033 855**

(73) Titulaire : **NACAM**
**Route de Blois**
**F-41100 Vendome (FR)**

(72) Inventeur : **Haldric, Bernard**
**15 rue Charles Lindbergh**
**F-41100 Vendome (FR)**
Inventeur : **Benedi, Gregorio**
**6 bis, rue du 20ème Chasseurs**
**F-41100 Vendome (FR)**
Inventeur : **Pretot, Daniel**
**2 rue Henri Dunant**
**F-41100 Vendome (FR)**

(74) Mandataire : **Phélip, Bruno et al**
**c/o Cabinet Harlé & Phélip 21, rue de La**
**Rochefoucauld**
**F-75009 Paris (FR)**

## Description

La présente invention est relative aux dispositifs de réglage de colonnes de direction pour véhicules automobiles et concerne plus particulièrement un dispositif de réglage pour une colonne de direction dont la position peut être ajustée en inclinaison et/ou en profondeur.

Certains véhicules automobiles, en particulier ceux dits "haut de gamme", sont munis de dispositifs de réglage de la position du volant qui permettent d'adapter la situation de ce dernier à la morphologie du conducteur et/ou à la géométrie du véhicule, tout spécialement de ses sièges.

Le volant étant placé dans la position que le conducteur trouve la plus confortable pour son style de conduite, la colonne de direction est immobilisée à l'aide d'un dispositif de blocage.

On a déjà proposé des dispositifs de blocage variés.

Certains sont du type à vis et écrou ; ils sont peu onéreux mais d'utilisation peu pratique car le blocage final dépend du couple avec lequel l'écrou est serré par l'utilisateur.

On a aussi proposé des dispositifs de blocage à came ou excentrique qui sont d'un prix de revient relativement peu élevé mais qui sont à l'origine de frottements ; ceci nécessite encore de développer des efforts relativement importants sur le levier de commande des moyens de blocage agissant sur la came ou excentrique.

Pour remédier à ces inconvénients, on a aussi proposé des dispositifs à genouillère. Divers modes de réalisation d'un dispositif de blocage de ce type sont, par exemple, exposés dans la demande de brevet EP-A-0 202 959 déposée par la Demanderesse.

Pour les modes de réalisation qui y sont décrits, les moyens de blocage à genouillère remédient à la plupart des inconvénients de la technique antérieure. Ils allient une relative simplicité de construction à un maniement à la fois précis et aisé. Comme on le sait, les dispositifs à genouillère possèdent deux positions extrêmales d'équilibre stable séparées par une position intermédiaire d'équilibre métastable ou point mort. Suivant que le dispositif est placé dans l'une ou l'autre de ces positions extrêmales de part et d'autre de la position intermédiaire à équilibre métastable, le dispositif est soit en position bloquée soit en position débloquée. Lorsque le dispositif est en position débloquée on peut régler aisément la position de la colonne de direction en manipulant le volant et lorsque le dispositif occupe l'autre de ces positions, la position bloquée, la colonne de direction est immobilisée dans la position requise où elle a été placée immédiatement avant.

Si les modes de réalisation qui sont décrits dans cette demande de brevet donnent satisfaction, ils présentent néanmoins certains inconvénients, les efforts de serrage s'exercent sur une pièce fixe solidaire du châssis du véhicule qui les transmet ensuite à un boîtier approximativement prismatique lié à la colonne de direction pour assurer l'immobilisation. Le dispositif à genouillère est situé à l'extérieur du mécanisme et ceci accroît son encombrement latéral d'une manière non négligeable. En outre les efforts s'exerçant sur les parois latérales d'une pièce prismatique, il faut que celle-ci soit très rigide et robuste ou comporte une entretoise pour ne pas se déformer au serrage exercé pour l'immobilisation. En outre, du fait que le bras de levier entre le point d'application de l'effort sur la manette de manoeuvre et le système de serrage est relativement petit, il s'ensuit un rapport de démultiplication peu favorable. En outre, les parties de la tige de guidage à l'extérieur du mécanisme sont soumises à des contraintes qui engendrent sa flexion. De plus dans le cas des modes de réalisation où l'on utilise des aiguilles placées dans des logements tronconiques, la possibilité d'exercer des efforts importants au-delà des extrémités de la course de la manette risque de provoquer un dégagement des aiguilles des alvéoles dans lesquels elles sont engagées.

L'invention a pour objet un dispositif de réglage de la position d'une colonne de direction d'un véhicule automobile qui ne présente pas ce genre d'inconvénients.

Le dispositif de réglage selon l'invention est d'un type exposé dans le préambule de la revendication principale et dont les particularités ressortent notamment de la partie caractérisante de celle-ci.

Le dispositif selon l'invention permet le réglage de la position de la colonne de direction tant en profondeur qu'en inclinaison.

D'autres caractéristiques de l'invention ressortiront de la lecture de la description et des revendications qui suivent et de l'examen du dessin annexé, donné seulement à titre d'exemple où :

– la Fig.1A est une coupe longitudinale schématique d'un mode de réalisation de l'invention et les Fig.1B et 1C des vues de détail de la Fig.1A de variantes d'exécution;

– les Fig.2A, 2B et 2C sont des vues schématiques partiellement en coupe suivant un plan transversal à la colonne de la Fig.1 d'un mode de réalisation de l'invention représenté dans ses positions débloquée, intermédiaire d'équilibre métastable et verrouillée respectivement;

– les Fig.3A, 3B et 3C sont des coupes par un plan perpendiculaire à l'axe, d'un autre mode de réalisation illustré dans les positions débloquée, intermédiaire et bloquée respectivement;

– la Fig.3D est une vue de côté du mode de réalisation des Fig.3A, 3B et 3C.

Les dispositifs de réglage de la position d'une colonne de direction d'un véhicule automobile étant bien connus, on ne décrira dans la suite que ce qui a trait directement à l'invention. Pour le surplus, l'homme du métier puisera dans les solutions classiques à sa disposition qui sont nécessaires à la résolution des problèmes particuliers auxquels il est confronté.

Comme on le voit sur le dessin, le dispositif suivant l'invention est associé à un tube 1 support de colonne rendu solidaire d'un boîtier 2 de section pratiquement rectangulaire, par exemple par soudure.

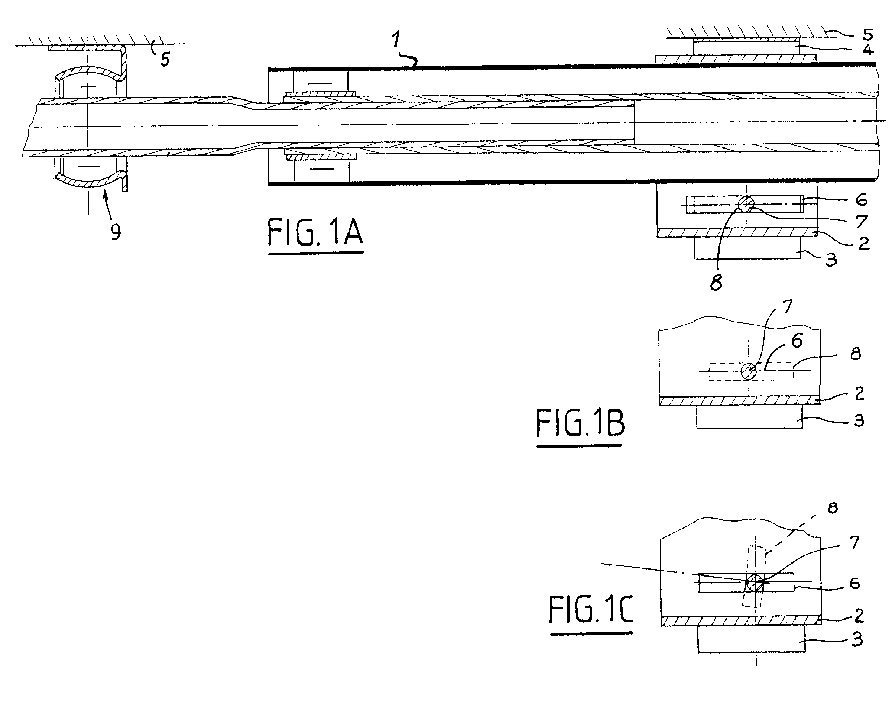

Le tube 1 peut être déplacé dans un plan vertical et s'il y a lieu suivant son axe longitudinal dans ce plan comme on le verra par la suite. Pour ce faire, il est logé entre deux ailes 3 d'une ferrure 4 rendue solidaire de la coque ou structure 5 d'un véhicule. Le boîtier 2 présente deux parois latérales 50 qui sont percées de trous 6 destinés à permettre le passage d'une tige 7. Les ailes 3 de la ferrure 4 sont percées chacune de lumières 8, par exemple circulaires (Fig.1A), rectilignes (Fig.1B), incurvées (Fig.1C). Ces lumières pratiquées dans les ailes sont aussi traversées par la tige 7 de manière à autoriser les degrés de liberté que l'on indiquera par la suite.

Pour permettre le changement d'orientation de la colonne, cette dernière est montée sur la structure ou coque du véhicule à l'aide d'une articulation telle qu'une rotule 9.

L'amplitude du déplacement angulaire de la colonne de direction est fixée par exemple par les dimensions des lumières 8. L'amplitude du déplacement en profondeur de la colonne de direction suivant son axe est fixée par exemple par les dimensions des trous 6 ménagés dans le boîtier et qui se présentent s'il y a lieu à la manière de boutonnières (Fig.1A et 1C) ou des lumières 8 (Fig.1B).

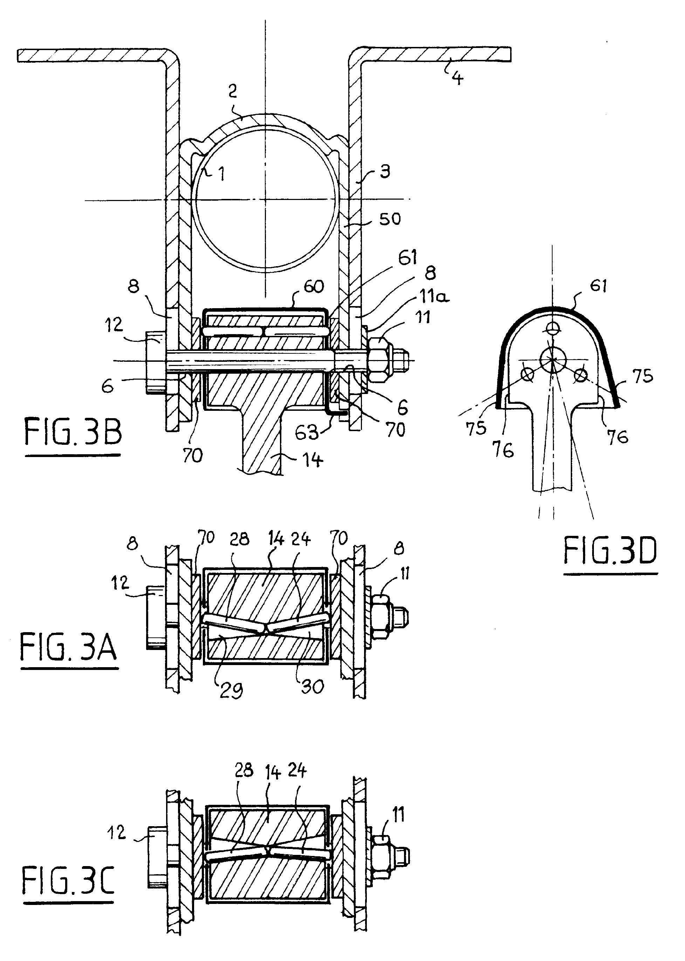

Le dispositif comprend aussi un écrou 11 vissé sur l'extrémité filetée de la tige 7 et une rondelle élastique 11a; ces rondelle et écrou constituent des moyens de butées. La tige 7 est aussi pourvue d'une tête 12. Le tout est assemblé comme il apparaît clairement sur les figures du dessin notamment les Fig.3. On voit donc que le boîtier 2 est maintenu entre les ailes 3 de la ferrure 4.

La genouillère suivant l'invention permet de libérer ou de retenir immobilisée par frottement, la colonne de direction dans la position dans laquelle on l'a placée. On utilise une genouillère constituée essentiellement d'un levier ou manette 14 associé à un cliquet 15.

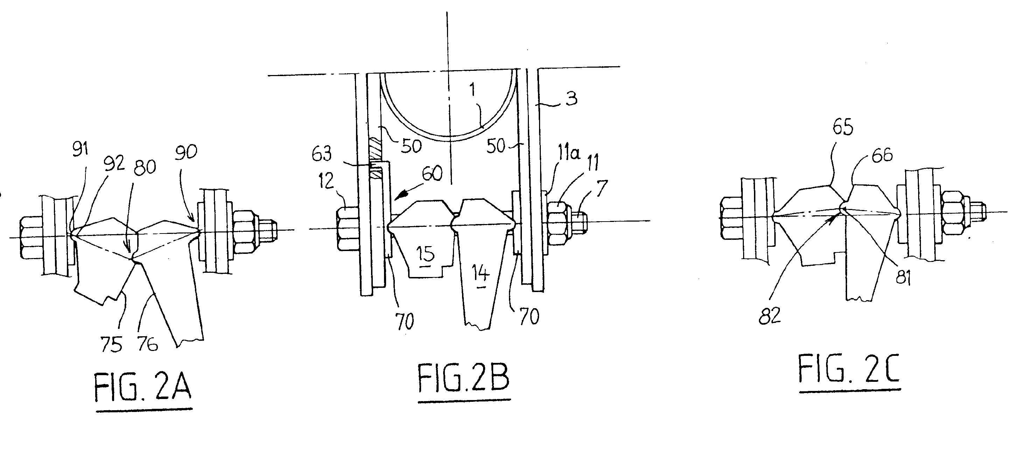

Le montage est clairement illustré sur la Fig.2 pour l'un des modes de réalisation. Le cliquet 15 est associé au levier 14 grâce à une jonction 80 faite d'un bossage 81 engagé dans une gorge 82. De même, le cliquet 15 et le levier 14 sont associés, comme dessiné, à des surfaces d'appui 70 à l'aide d'assemblages mobiles 90 constitués d'une protubérance 91 engagée dans une dépression 92. Le cliquet et le levier présentent aussi des méplats 65, 66 et des portées 75, 76 respectivement. Les méplats définissent la position débloquée et les portées la position bloquée.

On voit donc que lorsqu'on agit sur la manette 14 pour la faire passer de la position où elle est dessinée sur la Fig 2A à celle où elle est dessinée sur la Fig.2C ou inversement, on lui fait franchir une position intermédiaire d'équilibre métastable illustrée sur la Fig.2B.

Du fait des angles choisis pour les méplats et les portées, on voit que lorsque la manette ou levier franchit sa position d'équilibre, on exerce des efforts sur les surfaces d'appui 70 qui sont pratiquement parallèles à l'axe de la tige 7 et on vient donc presser les parois latérales 50 du boîtier 2 contre les ailes 3 de la ferrure 4 qui se trouve donc fortement immobilisée puisque les ailes sont retenues par la tête 12 et les moyens de butée.

En position débloquée, la rondelle élastique 11a annihile tout jeu existant et autorise un déplacement aisé du boîtier dans la ferrure. En position bloquée, la genouillère applique fortement et fermement les parois 50 contre les ailes 3 qui ne peuvent s'écarter retenues qu'elles sont par la tige 7. L'importance des efforts est réglée par le choix de l'inclinaison des méplats et portées et le serrage de l'écrou.

Au moins une des surfaces d'appui 70 est solidaire d'un corps 60 qui est immobilisé en rotation par rapport au boîtier grâce à un ergot 63 engagé comme dessiné dans l'une de parois 50 du boîtier 2 sur le tube 1.

On se reportera maintenant au mode de réalisation illustré sur les Fig.3 où les mêmes numéros de référence désignent des organes et éléments homologues.

Dans ce mode de réalisation on voit que la genouillère est constituée par un levier ou manette 14 qui coopère avec un cliquet constitué d'aiguilles 24,28 engagées dans des logements 29, 30 tronconiques. La manière dont les aiguilles sont disposées apparaît notamment sur la vue de côté illustrée par la Fig.3D. Les aiguilles sont retenues par une cage 61 qui est solidaire du corps 60 et est immobilisée en rotation grâce à un ergot 63 comme dessiné.

Le fonctionnement est le même que pour le mode de réalisation illustré sur la Fig.2.

On voit que lorsqu'on fait basculer le levier, les aiguilles s'arqueboutent au maximum quand le levier occupe sa position intermédiaire d'équilibre métastable et développe un effort axial, en direction de l'extérieur, maximal. Du fait de l'inclinaison donnée aux logements, on voit que lorsque le levier est en position débloquée (Fig.3A) les aiguilles ne sont pas bout à bout alignées et n'exercent pratiquement aucun effort alors que lorsque le levier est dans la position opposée (Fig.3C) par rapport au point d'équilibre métastable, elles exercent un effort axial qui tend à appliquer par frottement les parois latérales 50 du boîtier 2 contre les ailes 3 de la ferrure 4, comme indiqué, leur position relative faisant cette fois qu'elles sont proches de l'alignement.

Dans ce mode de réalisation les aiguilles sont maintenues par la cage bloquée en rotation par rapport à la colonne ce qui permet de ne pas avoir à utiliser d'alvéoles ménagés dans les surfaces d'appui et permet aussi d'assurer une butée positive du levier pour transmettre les efforts exercés sur lui directement à la colonne. L'immobilisation en fin de course du levier en position bloquée ou débloquée est obtenue grâce à des portées ou à des méplats comme expliqué qui déterminent l'inclinaison que l'on peut donner au levier.

Sur le mode de réalisation de la Fig.1A, le réglage en profondeur est obtenu à l'aide de trous 6 en forme de boutonnière dans les parois 50 du boîtier 2, dont l'axe longitudinal est approximativement parallèle à l'axe de la colonne, les lumières 8 pratiquées dans les ailes 3 de la ferrure 4 étant, elles circulaires. C'est l'inverse qui est illustré sur la Fig.1B pour permettre le déplacement relatif suivant un degré de liberté.

Sur la Fig.1C on utilise des trous 6 en boutonnière et des lumières 8 en fente en arc de cercle centré sur la rotule 9 ou inversement; on obtient ainsi deux degrés de liberté en inclinaison et en profondeur.

Les différentes combinaisons de lumières décrites ci-dessus permettent d'obtenir un système de genouillère qui reste fixe axialement ou angulairement ou qui accompagne axialement ou angulairement le volant.

La position centrale de la genouillère décrite présentement complète les positions extérieures (droite ou gauche) prévues antérieurement.

L'ensemble de ces différentes possibilités permet de répondre avec un maximum de souplesse aux impératifs d'implantation des constructeurs automobiles.

## Revendications

1. Dispositif de réglage de la position d'une colonne de direction d'un véhicule automobile comportant un tube (1) support de colonne solidaire d'un boîtier (2) de section approximativement rectangulaire, une ferrure (4) fixe avec deux ailes (3) entre lesquelles le boîtier (2) est monté réglable au moins angulairement à l'aide d'une articulation (9) fixée à la caisse (5) d'un véhicule et équipé d'une genouillère comprenant, entre autres, deux éléments (14; 15-24,28) déplaçables par pivotement l'un par rapport à l'autre entre deux positions extrêmes correspondant l'une au verrouillage du boîtier (2) par frottement entre ses parois latérales (50) et les ailes de la ferrure (4) et l'autre à son déverrouillage ainsi qu'une tige (7) qui traverse des trous (6) de ce boîtier (2) et qui est engagée dans des lumières (8) ménagées dans les ailes (3) de cette ferrure (4) et dont l'une des extrémités est pourvue de moyens de butée (11, 11a) contre l'une des ailes (3) et dont l'autre des extrémités est pourvue d'une tête (12) coopérant avec l'autre de ces ailes (3), caractérisé en ce que la genouillère est placée au moins partiellement dans le boîtier (2) et exerce de l'intérieur sur lui ses efforts pratiquement parallèlement à l'axe de la tige (7) pour appliquer par expansion les parois latérales (50) du boîtier (2) contre les ailes (3) de la ferrure (4) afin de l'immobiliser dans cette dernière en position verrouillée.

2. Dispositif selon la revendication 1, caractérisé en ce que la genouillère comprend un corps (60) immobilisé en rotation par rapport au tube (1) support de colonne.

3. Dispositif selon la revendication 2, caractérisé en ce que le corps (60) est immobilisé à l'aide d'un ergot (63) maintenu contre une aile (50) du boîtier (2).

4. Dispositif selon l'une quelconque des revendications 1 à 3, caractérisé en ce qu'il comprend des surfaces d'appui (70) au contact du boîtier (2) sur lesquelles la genouillère exerce ses efforts en direction de l'extérieur.

5. Dispositif selon la revendication 4, caractérisé en ce que la genouillère comprend un levier (14) et un cliquet (15) coopérant l'un avec l'autre à l'aide d'une jonction (80) faite d'un bossage (81) engagé dans une gorge (82) et où ce levier et ce cliquet coopèrent respectivement avec l'une des surfaces d'appui à l'aide d'un assemblage mobile (90) fait d'une protubérance (91) engagée dans une dépression (92).

6. Dispositif selon l'une quelconque des revendications 4 et 5, caractérisé en ce que ces surfaces d'appui (70) sont solidaires du corps (60).

7. Dispositif selon l'une quelconque des revendications 1 à 4, caractérisé en ce que la genouillère comprend un levier (14) avec des logements troncôniques (29,30), des aiguilles (24,28) placées dans ces logements et une cage (61) maintenant ces aiguilles et en ce que cette cage (61) est solidaire du corps (60).

8. Dispositif selon l'une quelconque des revendications 1 à 7, où ce boîtier (2) présente des parois (50) latérales percées de trous (6) en forme de boutonnières et en ce que l'axe longitudinal de ces boutonnières est approximativement parallèle à l'axe de la colonne et en ce que les lumières (8) des ailes (3) sont circulaires ou inversement.

9. Dispositif selon l'une quelconque des revendications 1 à 8, caractérisé en ce que les trous (6) et les lumières (8) sont les uns des boutonnières et les autres des fentes en arc de cercle.

10. Dispositif selon l'une quelconque des revendications 1 à 9, caractérisé en ce que la colonne est réglable en profondeur et/ou en direction.

## Patentansprüche

1. Vorrichtung zum Einstellen der Stellung einer Lenksäule eines Automobils, welche aufweist: Ein Stützrohr (1) einer einstückigen Säule eines Gehäuses (2) von ungefähr rechteckigem Querschnitt, eine feststehende Armature (4) mit zwei Flügeln (3), zwischen denen das Gehäuses (2) zumindest winkelmäßig einstellbar montiert ist mittels eines Gelenks (9), welches an einem Kasten (5) des Fahrzeuges befestigt ist, und mit einem Kniegelenk ausgerüstet ist, welches unter anderem aufweist: Zwei Elemente (14; 15-24, 28), welche durch Drehung relativ zueinander zwischen zwei extremen Stellungen verschiebbar sind, wobei sich die eine auf die Verriegelung des Gehäuses (2) durch Reibung zwischen seinen Seitenwänden (50) und den Flügeln der Armatur (4) bezieht, und das andere auf seine Entriegelung sowie eine Stange (7), welche Löcher (6) dieses Gehäuses (2) durchquert und welche mit in den Flügeln (3) dieser Armatur (4) ausgesparten Öffnungen im Eingriff ist, und bei denen eines der Enden mit Anschlagseinrichtungen (11, 11a) gegen einen der Flügel (3) versehen ist, und wobei das andere der Enden mit einem Kopf (12) versehen ist, welcher mit dem anderen dieser Flügel (3) zusammenwirkt, **dadurch gekennzeichnet,** daß das Kniegelenk zumindest teilweise in das Gehäuse (2) plaziert wird und darauf von innen her Kraftwirkungen praktisch parallel zu der Achse der Stange (7) ausübt, um durch Expansion die Seitenwände (50) des Gehäuses (2) gegen die Flügel (3) der Armatur (4) zu drücken, um es in letzterem im verriegelter Stellung zu immobilisieren.

2. Vorrichtung nach Anspruch 1, dadurch gekennzeichnet, daß das Kniegelenk einen Körper (60) aufweist, dessen Rotation bezüglich des Kolonnenstützrohrs (1) immobilisiert ist.

3. Vorrichtung nach Anspruch 2, dadurch gekennzeichnet, daß der Körper (60) mittels eines Stiftes (63) immobilisiert ist, welcher gegen einen Flügel (50) des Gehäuses (2) gehalten wird.

4. Vorrichtung nach einem der Ansprüche 1 bis 3, dadurch gekennzeichnet, daß sie Stützflächen (70) am Kontakt des Gehäuses (2) aufweist, auf welche das Kniegelenk ihre Krafteinwirkungen nach außen ausübt.

5. Vorrichtung nach Anspruch 4, dadurch gekennzeichnet, daß das Kniegelenk einen Hebel (14) und eine Klinke (15) aufweist, welche mittels eines Verbindungsstückes (80) zusammenwirken, welches aus einem Stutzen (81), der mit einer Kehle (82) im Eingriff steht, gefertigt und wobei dieser Hebel und diese Klinke jeweils mit einer der Stützflächen zusammenwirken mit Hilfe eines beweglichen Aufbaus (90), welcher aus einer Protuberanz (91) bestebt, die mit einer Vertiefung (92) in Eingriff steht.

6. Vorrichtung nach einem der Ansprüche 4 und 5, dadurch gekennzeichnet, daß diese Stützflächen (70) einteilig mit dem Körper (60) sind.

7. Vorrichtung nach einem der Ansprüche 1 bis 4, dadurch gekennzeichnet, daß das Kniegelenk einen Hebel (14) aufweist mit kegelstumpfförmigen Gehäusen (29,30), Nadeln (24, 28), welche in diesen Gehäusen plaziert sind und einen Käfig (61), welcher diese Nadeln hält und wobei dieser Käfig (61) einteilig mit dem Körper (60) ist.

8. Vorrichtung nach einem der Ansprüche 1 bis 7, wobei das Gehäuse (2) Seitenwände (50) aufweist, welche von Löchern (6) in der Form länglicher Aussparungen durchdrungen sind und wobei die longitudinale Achse dieser länglichen Aussparungen ungefähr parallel zu der Achse der Säule ist und wobei die Öffnungen (8) der Flügel (3) kreisförmig sind oder umgekehrt.

9. Vorrichtung nach einem der Ansprüche 1 bis 8, dadurch gekennzeichnet, daß die Löcher (6) und die Öffnungen (8) zum einen längliche Aussparungen sind und die anderen kreisbogenförmige Schlitze sind.

10. Vorrichtung nach einem der Ansprüche 1 bis 9, dadurch gekennzeichnet, daß die Säule in der Tiefe und/oder in der Richtung einstellbar ist.

## Claims

1. Device for adjusting the position of a steering column of a motor vehicle comprising a column supporting tube (1) which is integral with a casing (2) having an approximately rectangular cross-section, a fixed bracket (4) with two wings (3) between which the casing (2) is mounted so as to be adjustable at least in an angular manner by means of an articulation (9) secured on the body (5) of the vehicle and equipped with a toggle joint comprising, inter alia, two components (14; 15-24, 28) which can be displaced by pivoting relative to each other between two end positions, of which one corresponds to the locking of the casing (2) by friction between the lateral walls (50) thereof and the wings of the bracket (4) and the other to its unlocking, as well as a rod (7) which passes through holes (6) in this casing (2) and which is engaged in openings (8) provided in the wings (3) of this bracket (4) and of which one end is provided with means (11, 11a) for abutment against one of the wings (3) and of which the other end is provided with a head (12) cooperating with the other wing (3), characterised in that the toggle joint is located at least partially in the casing (2) and from the interior exerts on the casing its stresses which are practically parallel to the axis of the rod (7) in order to apply the lateral walls (50) of the casing (2) by expansion against the wings (3) of the bracket (4) in order to immobilise it in the bracket in the locking position.

2. Device according to Claim 1, characterised in that the toggle joint comprises a body (60) which is blocked in rotation relative to the column supporting tube (1).

3. Device according to Claim 2, characterised in that the body (60) is blocked by means of a pin (63) held against a wing (50) of the casing (2).

4. Device according to any one of Claims 1 to 3, characterised in that it comprises bearing surfaces (70) in contact with the casing (2) on which surfaces the toggle joint exerts its stresses in the external direction.

5. Device according to Claim 4, characterised in that the toggle joint comprises a lever (14) and a ratchet (15) cooperating with one another by means of a joining device (80) consisting of a boss (81) engaging in a groove (82) and where this lever and this ratchet cooperate respectively with one of the bearing surfaces by means of a movable assembly (90) comprised of a projection (91) engaged in a recess (92).

6. Device according to any one Claims 4 and 5, characterised in that these bearing surfaces (70) are integral with the body (60).

7. Device according to any one of Claims 1 to 4, characterised in that the toggle joint comprises a lever (14) with frustoconical recesses (29, 30), needles (24, 28) located in these recesses and a cage (61) holding these needles; and in that this cage (61) is integral with the body (60).

8. Device according to any one of Claims 1 to 7, wherein this casing (2) has side walls (50) pierced by oblong holes (6); and in that the longitudinal axis of these oblong holes is approximately parallel to the axis of the column; and in that the openings (8) in the wings (3) may be circular or inversely.

9. Device according to any one of Claims 1 to 8, characterised in that the holes (6) are oblong holes and the openings (8) are arcuate slots.

10. Device according to any one of Claims 1 to 9, characterised in that the depth and/or direction of the column is adjustable.

FIG.1A

FIG.1B

FIG.1C

FIG. 2C

FIG. 2B

FIG. 2A

8

FIG.3B

FIG.3A

FIG.3C

FIG.3D